# EUROPÄISCHE PATENTSCHRIFT

(11) **EP 3 762 246 B1**
(45) Veröffentlichungstag und Bekanntmachung des Hinweises auf die Patenterteilung: **11.05.2022**
(21) Anmeldenummer: 19710642.0
(22) Anmeldetag: 07.03.2019
(51) Int. Cl.: B60K 1/04, B60K 1/00, B60K 11/02

(54) **FAHRZEUG MIT ZUMINDEST EINEM ELEKTROCHEMISCHEN ENERGIESPEICHER**
VEHICLE WITH AT LEAST ONE ELECTROCHEMICAL ENERGY STORAGE
VÉHICULE AVEC AU MOINS UN STOCKAGE D'ÉNERGIE ÉLECTROCHIMIQUE

(30) Priorität: 08.03.2018 DE 102018203538
(43) Veröffentlichungstag der Anmeldung: 13.01.2021
(73) Patentinhaber: VOLKSWAGEN AKTIENGESELLSCHAFT, 38440 Wolfsburg (DE)
(72) Erfinder: VOIGT, Arne-Christian, 38104 Braunschweig (DE); SCHAAR, Bastian, 38116 Braunschweig (DE)
(86) Internationale Anmeldenummer: PCT/EP2019/055742
(87) Internationale Veröffentlichungsnummer: WO 2019/170818

(56) Entgegenhaltungen:
- DE-A1-102011 079 640
- DE-A1-102015 014 781
- DE-A1-102015 223 368
- DE-A1-102016 119 122
- US-A1- 2011 132 017
- US-A1- 2017 282 676

## Beschreibung

Die Erfindung betrifft ein Fahrzeug mit zumindest einem elektrochemischen Energiespeicher nach dem Oberbegriff des Patentanspruchs 1 der Erfindung.

In der jüngeren Vergangenheit werden aufgrund des ständig knapper werdenden Angebotes an Kraftstoffen für den verbrennungsmotorischen Antrieb von Kraftfahrzeugen große Anstrengungen unternommen, alternative Antriebsarten zur Verfügung zu stellen. Zunehmend an Bedeutung gewinnt dabei der elektromotorische Antrieb, der aus einer oder mehreren elektrochemischen Speicherelementen, wie Akkumulatoren bzw. Batterien, mit elektrischer Energie versorgt wird. Das Kraftfahrzeug kann dabei ausschließlich mittels eines oder mehrerer elektromotorischer Antriebe betrieben werden oder als sogenanntes Hybrid- oder Plug-in-Hybrid-Fahrzeug zum Antrieb sowohl einen Verbrennungsmotor als auch einen oder mehrere Elektromotoren aufweisen. Durch die Fachwelt werden in immer stärkerem Maße Li-Ionen-Akkumulatoren als sogenannte Traktionsbatterien respektive Antriebsbatterien favorisiert, die ihrerseits vorteilhaft keinen Memory-Effekt und eine geringe Selbstentladung aufweisen. Ungeachtet dessen ist der Wirkungsgrad derartiger Akkumulatoren bzw. Batterien temperaturabhängig und nimmt bei niedriger Temperatur stark ab. Darüber hinaus ist festzustellen, dass im Fahrbetrieb des Kraftfahrzeugs sowie in der Ladephase derartiger Batterien oder Batteriesysteme durch elektrische Verlustleistung in stromführenden Bauteilen Wärme in das Batteriesystem eingetragen wird, die zu einer hohen thermischen Belastung der Batterien führen kann. Durch den Betrieb der Batterie bei hohen Zellentemperaturen ist bekanntermaßen eine beschleunigte Alterung der Batteriezellen zu verzeichnen, welches mit einer verkürzten Lebensdauer des Batteriesystems einhergeht. In extremen Fällen kann eine zu hohe Zelltemperatur zum sogenannten Durchbrennen der Batteriezellen und somit zu einem Defekt des Batteriesystems führen. Diese Umstände erfordern Temperierungsmaßnahmen des Batteriesystems, um eine hohe Lebensdauer desselben zu erzielen sowie ein mittels Elektromotor angetriebenes Kraftfahrzeuge sicher betreiben und als Serienfahrzeuge umsetzen zu können.

So beschreibt die DE 10 2011 084 000 A1 eine an einer Bodenstruktur einer elektrischen Komponente anbringbare Vorrichtung zum Führen eines Kühlfluids. Die besagte Vorrichtung weist eine flache rechteckige Wanne auf, die mittels eines Deckels verschließbar ist. Die Wanne bildet unter Zuhilfenahme des Deckels eine Fluidführungskammer aus, welche mittels Kühlfluidleitungen an einen Kühlmittelkreislauf angeschlossen bzw. anschließbar ist. Die Fluidführungskammer ist durch eine Mehrzahl von Wänden gebildet. Unter Vermittlung des Deckels kontaktiert die Wanne die Bodenstruktur der elektrischen Komponente.

Die DE 10 2013 011 894 A1 beschreibt eine Aufnahmevorrichtung zur Aufnahme wenigstens einer Energiespeicherkomponente. Besagte Aufnahmevorrichtung weist wenigstens ein rahmenförmiges Aufnahmeteil auf, welches mehrere Aufnahmeabteile ausbildet. Dem Aufnahmeteil ist ein weiteres Aufnahmeteil mit einer Kühleinrichtung zugeordnet. Auf dem weiteren Aufnahmeteil ist die wenigstens eine Energiespeicherkomponente abgestellt. Das weitere Aufnahmeteil weist eine wannenförmige Gestalt mit einer Grundfläche und lotrecht abragenden Rändern auf. In der Grundfläche des weiteren Aufnahmeteils ist eine durch längliche, mäandernd verlaufende Vertiefungen eine Kühlmittelkanalstruktur ausgebildet, welche einen Kühlmitteleinlass und einen Kühlmittelauslass aufweist. Dem weiteren Aufnahmeteil ist ein plattenförmiges Abdeckelement zugeordnet, um die Kühlmittelkanalstruktur nach oben hin zu verschließen. Das plattenförmige Abdeckelement besteht aus einem thermisch gut leitfähigem Metall, wie z.B. Aluminium. Dem Aufnahmeteil ist ferner ein Verschlussteil zugeordnet, welches die wenigstens eine Energiespeicherkomponente nach oben hin abdeckt.

Die DE 10 2011 076 737 A1 beschreibt eine Vorrichtung zur Bereitstellung elektrischer Energie, mit einem elektrochemischen Energiespeicher, insbesondere einem Traktionsakkumulator, und mit einer Brennstoffzellenanordnung zur Erzeugung elektrischer Energie. Der elektrochemische Energiespeicher ist mit der Brennstoffzellenanordnung mittels einer Wärmeübertragungsanordnung thermisch gekoppelt oder koppelbar. Im Besonderen ist dabei vorgesehen, dass eine Heizeinrichtung (PTC-Heizung) der Brennstoffzelle und der elektrochemische Energiespeicher in einem ersten Fluidsystem und die Brennstoffzelle in einem zweiten Fluidsystem angeordnet sind. Alternativ dazu ist vorgesehen, dass die Heizeinrichtung (PTC-Heizung) der Brennstoffzelle und die Brennstoffzelle im ersten Fluidsystem und der elektrochemische Energiespeicher im zweiten Fluidsystem angeordnet sind. Die beiden Fluidsysteme sind über einen als separates Bauteil ausgebildeten Wärmetauscher thermisch miteinander gekoppelt.

Die DE 10 2011 121 245 A1 offenbart ein System zur Konditionierung eines Energiespeichersystems, wie einer Hochspannungsbatterie oder Brennstoffzelle, durch Erwärmung oder Kühlung. Hierzu sind eine Heizeinheit und eine Kühleinheit vorgesehen, welche thermisch mit dem Energiespeichersystem gekoppelt sind. Die Heizeinheit kann ein oder mehrere Heizelemente in enger Nähe zu verschiedenen Abschnitten des Energiespeichersystems aufweisen. Die Heizeinheit ist durch Heizelemente, Wasserummantelungen, Heizpolster, Heizmatten oder dergleichen mehr gebildet. Die Kühleinheit kann ein oder mehrere Kühlelemente in enger Nähe zu verschiedenen Abschnitten des Energiespeichersystems aufweisen. Die Kühleinheit ist durch Kühlgebläse, Wasserummantelungen, Luftdurchgänge, Kühlkörper, thermoelektrische Kühler, Kondensatoren oder dergleichen mehr gebildet.

Die US 2017/282676 A1 offenbart einen elektrochemischen Energiespeicher mit zwei Wärmetauschern, die an zwei Temperierungsfluid-Kreisläufe angeschlossen sind.

Aufgabe der Erfindung ist es, ein Fahrzeug mit zumindest einem elektrochemischen Energiespeicher zu schaffen, welches Fahrzeug im Hinblick auf den Stand der Technik eine alternative Temperierung des elektrochemischen Energiespeichers ermöglicht.

Erfindungsgemäß wird ein Fahrzeug mit den Merkmalen des Anspruchs 1 vorgeschlagen.

Vorteilhaft wird zum einen eine direkte und damit leistungsfähige sowie sichere Temperierung des elektrochemischen Energiespeichers bei minimiertem Investitionsaufwand sowie Bauraum ermöglicht. Zum anderen ist durch das Vorsehen von zumindest zwei Temperierungsfluid-Kreisläufen eine einfache und kostengünstige Darstellung sowohl einer Heizungs- als auch einer Kühlfunktionalität ermöglicht, um ein möglichst optimales Temperatur-Betriebsfenster für den elektrochemischen Energiespeicher zur Verfügung zu stellen.

Erfindungsgemäß ist vorgesehen, dass zumindest ein Temperierungsfluid-Kreislauf durch einen Hochtemperatur-Kreislauf (HT) und zumindest ein weiterer Temperierungsfluid-Kreislauf durch einen Niedrigtemperatur-Kreislauf (NT) des Fahrzeugs gebildet ist. Durch diese Maßnahme ist es in vorteilhafter Weise ermöglicht, bei besonders kalten Temperaturen unter Zuhilfenahme des Hochtemperatur-Kreislaufes (HT) den elektrochemischen Energiespeicher zur Erreichung des optimalen Temperatur-Betriebsfensters schnell aufzuwärmen und im Anschluss daran unter Zuhilfenahme des Niedrigtemperatur-Kreislaufes (NT) dieses optimale Temperatur-Betriebsfenster zu halten.

Wie die Erfindung weiter vorsieht, ist der Hochtemperatur-Kreislauf (HT) durch einen Kühlkreislauf einer Brennstoffzellenanordnung gebildet oder in einen solchen eingebunden. Hierdurch ist eine direkte Einkopplung der Abwärme der Brennstoffzellenanordnung in den elektrochemischen Energiespeicher ermöglicht.

Die Unteransprüche beschreiben bevorzugte Weiterbildungen oder Ausgestaltungen der Erfindung.

Bevorzugt ist vorgesehen, dass im Hochtemperatur-Kreislauf (HT) ein Fluidstrom mit Temperaturen zwischen 80°C und 120°C und im Niedrigtemperatur-Kreislauf (NT) ein Fluidstrom mit Temperaturen zwischen 10°C und 30°C zirkulieren.

Gemäß einer ersten bevorzugten Ausführungsvariante der Erfindung sind der zumindest eine Hochtemperatur-Kreislauf (HT) und der zumindest eine Niedrigtemperatur-Kreislauf (NT) voneinander separiert in besagten Wärmetauscher eingebunden, wodurch die Temperatursteuerung vereinfacht ist.

Gemäß einer zweiten bevorzugten Ausführungsvariante der Erfindung sind die Fluidströme des zumindest einen Hochtemperatur-Kreislaufes (HT) und des zumindest einen Niedrigtemperatur-Kreislaufes (NT) innerhalb des besagten Wärmetauschers zumindest temporär vereint, indem die Temperierungsfluide der beiden Temperierungsfluid-Kreisläufe sozusagen im Wärmetauscher gemischt werden, wodurch die Leistungsfähigkeit der Temperatursteuerung weiter verbesserbar ist.

Wie die Erfindung weiter vorsieht, ist der Hochtemperatur-Kreislauf (HT) bevorzugt durch einen Kühlkreislauf einer Verbrennungskraftmaschine und/oder einer Brennstoffzellenanordnung gebildet oder in einen solchen eingebunden. Hierdurch ist eine direkte Einkopplung der Abwärme der Verbrennungskraftmaschine und/oder der Brennstoffzellenanordnung in den elektrochemischen Energiespeicher ermöglicht.

Bevorzugt ist vorgesehen, dass der Niedrigtemperatur-Kreislauf (NT) durch einen an sich bekannten und üblicherweise sowieso vorhandenen Klimatisierungskreislauf insbesondere zur Klimatisierung der Fahrgastzelle des Fahrzeugs gebildet oder in einen solchen eingebunden ist, wodurch der Investitionsaufwand gemindert ist. Unter Klimatisierung wird insoweit sowohl Kühlung als auch Erwärmung verstanden.

Bevorzugt sind die Temperierungsfluid-Kreisläufe durchflussgeregelt ausgebildet, indem der jeweilige Fluiddurchfluss durch den Wärmetauscher in Abhängigkeit erfasster Temperaturen, insbesondere des elektrochemischen Energiespeichers, und unter Zuhilfenahme an sich bekannter Steuer- und Regelungstechnik geöffnet, gedrosselt oder geschlossen wird.

Gemäß einer besonders praxisnahen Ausführung des zumindest einen Wärmetauschers ist derselbe durch einen Gehäuseboden und/oder eine Gehäusewandung und/oder einen Gehäusedeckel des Gehäuses des elektrochemischen Energiespeichers gebildet oder als Ein- oder Anbauteil das besagte Gehäuse unmittelbar oder mittelbar über Wärmeübertragungsmittel kontaktierend an dasselbe angebracht.

Bei dem vorstehend beschriebenen Fahrzeug handelt es sich bevorzugt um ein Hybrid- oder Plug-in-Hybrid-Fahrzeug oder ein Elektro-Fahrzeug, welches zumindest einen Range-Extender aufweist, wobei besagter Range-Extender durch eine Verbrennungskraftmaschine und/oder eine Brennstoffzellenanordnung gebildet ist. Insoweit verfügt ein derartiges Fahrzeug über zumindest einen elektrischen Antrieb, welcher mittels zumindest eines elektrochemischen Energiespeichers in Form einer als Traktionsbatterie fungierenden sogenannten Hochvoltbatterie (HV-Batterie) mit elektrischer Energie versorgt wird.

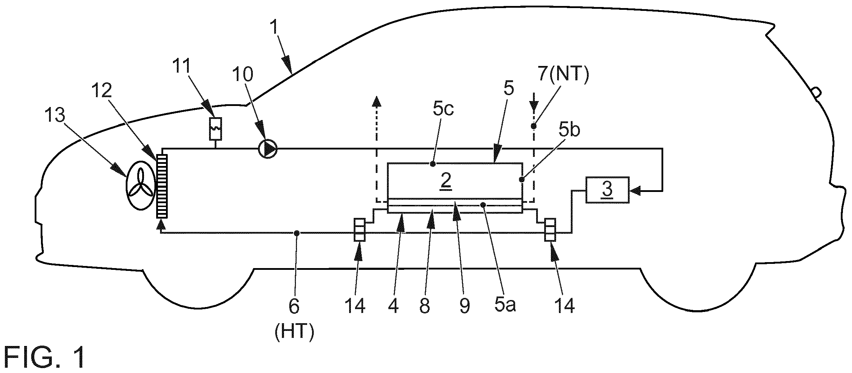

Nachstehend wird die Erfindung anhand eines in der Zeichnung schematisch dargestellten Ausführungsbeispiels näher erläutert. Sie ist jedoch nicht auf dieses beschränkt, sondern erfasst alle durch die Patentansprüche definierten Ausgestaltungen. Die einzige Figur 1 zeigt äußerst schematisch ein erfindungsgemäß mit einer Temperierung eines elektrochemischen Energiespeichers ausgestattetes Fahrzeug.

In Fig. 1 sind ein äußerst schematisch dargestelltes Fahrzeug in Form eines Personenkraftwagens mit dem Bezugszeichen 1 und ein äußerst schematisch dargestellter, wiederaufladbarer elektrochemischer Energiespeicher in Form einer als Traktionsbatterie fungierenden Hochvoltbatterie (HV-Batterie / Akkumulator) mit dem Bezugszeichen 2 versehen. Der besagte elektrochemische Energiespeicher 2 dient im Wesentlichen dazu, zumindest einen nicht zeichnerisch dargestellten Elektro-Antriebsmotor mit elektrischer Energie zu versorgen. Das Fahrzeug 1 weist gemäß diesem Ausführungsbeispiel eine äußerst schematisch dargestellte Brennstoffzellenanordnung 3 auf.

Wie bereits einleitend dargetan, ist der Wirkungsgrad elektrochemischer Energiespeicher 2 temperaturabhängig und nimmt bei niedriger Temperatur stark ab. Darüber hinaus ist festzustellen, dass im Fahrbetrieb des Fahrzeugs 1 sowie in der Ladephase derartiger elektrochemischer Energiespeicher 2 durch elektrische Verlustleistung in stromführenden Bauteilen Wärme in das System eingetragen wird, die zu einer hohen thermischen Belastung der elektrochemischen Energiespeicher 2 führen kann.

Um diesen nachteiligen Umständen zu begegnen, ist vorliegend ein Mittel zur Temperierung, d.h. Erwärmung und gegebenenfalls Kühlung des elektrochemischen Energiespeichers 2 in Form zumindest eines Wärmetauschers 4 vorgesehen. Der Wärmetauscher 4 ist in ein Gehäuse 5 des elektrochemischen Energiespeichers 2 integriert und an wenigstens zwei, vorliegend einen ersten und einen zweiten Temperierungsfluid-Kreislauf 6, 7 des Fahrzeugs 1 angeschlossen ist.

Gemäß diesem Ausführungsbeispiel ist der Wärmetauscher 4 integraler Bestandteil eines Gehäusebodens 5a derart, dass in denselben separate Fluidkanäle 8, 9 eingearbeitet sind, die an jeweils einen der Temperierungsfluid-Kreisläufe 6, 7 angeschlossen sind. Die Erfindung beschränkt sich jedoch nicht auf besagten Gehäuseboden 5a, sondern erfasst auch Ausgestaltungen, die zusätzlich oder in Alleinstellung eine oder mehrere Gehäusewandungen 5b oder einen Gehäusedeckel 5c vorsehen, bei denen der Wärmetauscher 4 integraler Bestandteil derselben ist (nicht zeichnerisch dargestellt). Alternativ sind auch Lösungen durch die Erfindung mit erfasst, bei denen der Wärmetauscher 4 als Ein- oder Anbauteil ausgebildet und am Gehäuse 5 angebracht ist, indem er dieses unmittelbar oder mittelbar über ein Wärmeübertragungsmittel, wie eine Wärmeleitfolie oder dergleichen, kontaktiert (nicht zeichnerisch dargestellt). Für den Fachmann versteht es sich von selbst, dass der in das Gehäuse 5, vorliegend in den Gehäuseboden 5a desselben integrierte Wärmetauscher 4 thermisch an die nicht zeichnerisch dargestellten Zellen respektive Primärzellen des elektrochemischen Speichers 2 angeschlossen ist.

Der erste Temperierungsfluid-Kreislauf 6 des Fahrzeugs 1 ist durch einen Hochtemperatur-Kreislauf (HT), wogegen der zweite Temperierungsfluid-Kreislauf 7 des Fahrzeugs 1 durch einen Niedrigtemperatur-Kreislauf (NT) gebildet bzw. in einen solchen eingebunden ist. Innerhalb der Temperierungsfluid-Kreisläufe 6, 7 zirkuliert jeweils ein Temperierungsfluid. Der Fluidstrom wird jeweils mittels einer Zirkulationspumpe 10 bewirkt.

Der erste Temperierungsfluid-Kreislauf 6 dient der Kühlung der Brennstoffzellenanordnung 3.

Im Hinblick darauf sind in diesen ersten Temperierungsfluid-Kreislauf 6 neben besagter Brennstoffzellenanordnung 3, der Fluidkanal 8 des Gehäusebodens 5a, ein Ausgleichsbehälter 11 und frontseitig des Fahrzeugs 1 ein an sich bekannter Fahrzeugkühler 12 mit Gebläse 13 eingebunden. Der Fluidkanal 8 ist dabei zweckmäßigerweise im Rücklauf der Brennstoffzellenanordnung 3 angeordnet.

Im ersten Temperierungsfluid-Kreislauf 6 respektive Hochtemperatur-Kreislauf (HT) zirkuliert ein Fluidstrom mit Temperaturen zwischen etwa 80°C und etwa 120°C. Insbesondere bei Frosttemperaturen sind diese Temperaturen besonders gut geeignet, den elektrochemischen Energiespeicher 2 schnell auf eine sogenannte Wohlfühltemperatur in einem optimalen Temperatur-Betriebsfenster von etwa 10°C bis etwa 30°C zu erwärmen. Der Fluidstrom im ersten Temperierungsfluid-Kreislauf 6 respektive Hochtemperatur-Kreislauf (HT) erfolgt durchflussgeregelt mittels an sich bekannter Ventile 14, insbesondere 3/2-Wegeventile, die bevorzugt mittels einer nicht zeichnerisch dargestellten elektronischen Steuereinheit in Abhängigkeit mittels nicht zeichnerisch dargestellter Temperatursensoren erfasster aktueller Temperaturen des elektrochemischen Energiespeichers 2 und/oder des Temperierungsfluids und/oder der erfassten Außentemperatur angesteuert werden.

Der zweite Temperierungsfluid-Kreislauf 7 bzw. Niedrigtemperatur-Kreislauf (NT) des Fahrzeugs 1 ist durch einen an sich bekannten und im Fahrzeug 1 üblicherweise vorhandenen Klimatisierungskreislauf gebildet bzw. in einen solchen eingebunden, indem dieser durch den Fluidkanal 9 des Gehäusebodens 5a geführt ist. Auf die Darstellung von Ventilen 14 und Sensoren einer bevorzugt elektronischen Steuereinheit, einer Zirkulationspumpe 10, eines etwaigen Ausgleichsbehälters 10 und etwaiger anderer eventuell erforderlicher Einrichtungen des zweiten Temperierungsfluid-Kreislaufes 7 wurde der Einfachheit halber verzichtet, da diese nicht erfindungswesentlich sind.

Im zweiten Temperierungsfluid-Kreislauf 7 respektive Niedrigtemperatur-Kreislauf (NT) zirkuliert ein Fluidstrom mit Temperaturen zwischen etwa 10°C und etwa 30°C. Dieser ist besonders gut geeignet, den elektrochemischen Energiespeicher 2 auf der besagten Wohlfühltemperatur im optimalen Temperatur-Betriebsfenster von etwa 10°C bis etwa 30°C zu halten. Der Fluidstrom im zweiten Temperierungsfluid-Kreislauf 7 respektive Niedrigtemperatur-Kreislauf (NT) erfolgt bevorzugt ebenfalls durchflussgeregelt.

Das vorstehend beschriebene Ausführungsbeispiel stellt auf zwei innerhalb des Wärmetauschers 4 voneinander separierte Temperierungsfluid-Kreisläufe 6, 7 ab. Demgegenüber kann auch vorgesehen sein und ist demgemäß durch die Erfindung mit erfasst, dass die Temperierungsfluidströme der Temperierungsfluid-Kreisläufe 6, 7 bzw. des Hoch- und Niedrigtemperatur-Kreislaufes (HT, NT) innerhalb des besagten Wärmetauschers 4 zumindest temporär vereint sind (nicht zeichnerisch dargestellt). D. h., die Temperierungsfluide der beiden Temperierungsfluid-Kreisläufe 6, 7 werden sozusagen in einem gemeinsamen Fluidkanal des Wärmetauschers 4 gemischt, wodurch wie bereits oben ausgeführt die Leistungsfähigkeit der Temperatursteuerung weiter verbesserbar ist.

### Bezugszeichenliste

- 1: Fahrzeug
- 2: elektrochemischer Energiespeicher
- 3: Brennstoffzellenanordnung
- 4: Wärmetauscher
- 5: Gehäuse
- 5a: Gehäuseboden
- 5b: Gehäusewandung
- 5c: Gehäusedeckel
- 6: erster Temperierungsfluid-Kreislauf
- 7: zweiter Temperierungsfluid-Kreislauf
- 8: Fluidkanal (erster Temperierungsfluid-Kreislauf 6)
- 9: Fluidkanal (zweiter Temperierungsfluid-Kreislauf 7)
- 10: Zirkulationspumpe
- 11: Ausgleichsbehälter
- 12: Fahrzeugkühler
- 13: Gebläse
- 14: Ventil
- (HT): Hochtemperatur-Kreislauf
- (NT): Niedrigtemperatur-Kreislauf

## Patentansprüche

1. Fahrzeug (1) mit zumindest einem elektrochemischen Energiespeicher (2), welcher Energiespeicher (2) wenigstens ein Mittel zur Temperierung aufweist, wobei das Mittel zur Temperierung durch zumindest einen in ein Gehäuse (5) des zumindest einen elektrochemischen Energiespeichers (2) integrierten Wärmetauscher (4) gebildet ist, welcher Wärmetauscher (4) an wenigstens zwei Temperierungsfluid-Kreisläufe (6, 7) des Fahrzeugs (1) angeschlossen ist, wobei zumindest ein Temperierungsfluid-Kreislauf (6) durch einen Hochtemperatur-Kreislauf (HT) und zumindest ein weiterer Temperierungsfluid-Kreislauf (7) durch einen Niedrigtemperatur-Kreislauf (NT) des Fahrzeugs (1) gebildet ist,
**dadurch gekennzeichnet, dass** der Hochtemperatur-Kreislauf (HT) durch einen Kühlkreislauf einer Brennstoffzellenanordnung gebildet oder in einen solchen eingebunden ist.

2. Fahrzeug (1) nach Anspruch 1, **dadurch gekennzeichnet, dass** im Hochtemperatur-Kreislauf (HT) ein Fluidstrom mit Temperaturen zwischen 80°C und 120°C und im Niedrigtemperatur-Kreislauf (NT) ein Fluidstrom mit Temperaturen zwischen 10°C und 30°C zirkulieren.

3. Fahrzeug (1) nach Anspruch 1 oder 2, **dadurch gekennzeichnet, dass** der zumindest eine Hochtemperatur-Kreislauf (HT) und der zumindest eine Niedrigtemperatur-Kreislauf (NT) voneinander separiert in besagten Wärmetauscher (4) eingebunden sind.

4. Fahrzeug (1) nach Anspruch 1 oder 2, **dadurch gekennzeichnet, dass** die Fluidströme des zumindest einen Hochtemperatur-Kreislaufes (HT) und des zumindest einen Niedrigtemperatur-Kreislaufes (NT) innerhalb des besagten Wärmetauschers (4) zumindest temporär vereint sind.

5. Fahrzeug (1) nach einem der Ansprüche 1 bis 4, **dadurch gekennzeichnet, dass** der Hochtemperatur-Kreislauf (HT) durch einen Kühlkreislauf einer Verbrennungskraftmaschine (3) gebildet oder in einen solchen eingebunden ist.

6. Fahrzeug (1) nach einem der Ansprüche 1 bis 4, **dadurch gekennzeichnet, dass** der Niedrigtemperatur-Kreislauf (NT) durch einen Klimatisierungskreislauf des Fahrzeugs (1) gebildet oder in einen solchen eingebunden ist.

7. Fahrzeug (1) nach einem der vorhergehenden Ansprüche, **dadurch gekennzeichnet, dass** die Temperierungsfluid-Kreisläufe (6, 7) durchflussgeregelt ausgebildet sind.

8. Fahrzeug (1) nach einem der vorhergehenden Ansprüche, **dadurch gekennzeichnet, dass** der zumindest eine Wärmetauscher (4) durch einen Gehäuseboden (5a) und/oder eine Gehäusewandung (5b) und/oder einen Gehäusedeckel (5c) des Gehäuses (5) des elektrochemischen Energiespeichers (2) gebildet oder als Ein- oder Anbauteil das besagte Gehäuse (5) unmittelbar oder mittelbar über Wärmeübertragungsmittel kontaktierend an dasselbe angebracht ist.

9. Fahrzeug (1) nach einem der vorhergehenden Ansprüche, **dadurch gekennzeichnet, dass** das Fahrzeug (1) ein Hybrid- oder Plug-in-Hybrid-Fahrzeug (1) oder ein Elektro-Fahrzeug (1) ist, welches zumindest einen Range-Extender aufweist, wobei besagter Range-Extender durch eine Verbrennungskraftmaschine (3) und/oder eine Brennstoffzellenanordnung gebildet ist.

## Claims

1. Vehicle (1) with at least one electrochemical energy store (2), which energy store (2) comprises at least one means for temperature control, wherein the means for temperature control is formed by at least one heat exchanger (4) integrated in a housing (5) of the at least one electrochemical energy store (2), which heat exchanger (4) is connected to at least two temperature control fluid circuits (6, 7) of the vehicle (1), wherein at least one temperature control fluid circuit (6) is formed by a high-temperature circuit (HT) and at least one further temperature control fluid circuit (7) is formed by a low-temperature circuit (NT) of the vehicle (1), **characterized in that** the high-temperature circuit (HT) is formed by a cooling circuit of a fuel cell arrangement, or is integrated in such a circuit.

2. Vehicle (1) according to Claim 1, **characterized in that** a fluid stream with temperatures between 80°C and 120°C circulates in the high-temperature circuit (HT), and a fluid stream with temperatures between 10°C and 30°C circulates in the low-temperature circuit (NT).

3. Vehicle (1) according to Claim 1 or 2, **characterized in that** the at least one high-temperature circuit (HT) and the at least one low-temperature circuit (NT) are integrated in said heat exchanger (4) separated from one another.

4. Vehicle (1) according to Claims 1 or 2, **characterized in that** the fluid streams of the at least one high-temperature circuit (HT) and of the at least one low-temperature circuit (NT) within the said heat exchanger (4) are at least temporarily united.

5. Vehicle (1) according to any one of Claims 1 to 4, **characterized in that** the high-temperature circuit (HT) is formed by a cooling circuit of an internal combustion engine (3) or integrated into such.

6. Vehicle (1) according to any one of Claims 1 to 4, **characterized in that** the low-temperature circuit (NT) is formed by an air-conditioning circuit of the vehicle (1) or integrated into such.

7. Vehicle (1) according to any one of the preceding claims, **characterized in that**
the temperature control fluid circuits (6, 7) are flow-controlled.

8. Vehicle (1) according to any one of the preceding claims, **characterized in that** the at least one heat exchanger (4) is formed by a housing floor (5a), and/or a housing wall (5b), and/or a housing cover (5c) of the housing (5) of the electrochemical energy store (2) or, as an integrated or attachment part, said housing (5) is attached to the same, directly or indirectly contacting via heat transfer means.

9. Vehicle (1) according to any one of the preceding claims, **characterized in that** the vehicle (1) is a hybrid or plug-in hybrid vehicle (1), or an electric vehicle (1) which comprises at least one range extender, wherein said range extender is formed by an internal combustion engine (3) and/or a fuel cell arrangement.

## Revendications

1. Véhicule (1) pourvu d'au moins un stockage d'énergie électrochimique (2), lequel stockage d'énergie électrochimique (2) présente au moins un moyen pour la thermorégulation, le moyen pour la thermorégulation étant formé par au moins un échangeur thermique (4) intégré dans un boîtier (5) de l'au moins un stockage d'énergie électrochimique (2), lequel échangeur thermique (4) est relié à au moins deux circuits (6, 7) de fluide de thermorégulation du véhicule (1), au moins un circuit (6) de fluide de thermorégulation étant formé par un circuit haute température (HT) et au moins un autre circuit (7) de fluide de thermorégulation étant formé par un circuit basse température (NT) du véhicule (1), **caractérisé en ce que** le circuit haute température (HT) est formé par un circuit de refroidissement d'un agencement de pile à combustible ou est intégré dans un tel circuit.

2. Véhicule (1) selon la revendication 1, **caractérisé en ce qu"**un flux fluidique présentant des températures entre 80 °C et 120 °C circule dans le circuit haute température (HT) et un flux fluidique présentant des températures entre 10 °C et 30 °C circule dans le circuit basse température (NT).

3. Véhicule (1) selon la revendication 1 ou 2, **caractérisé en ce que** l'au moins un circuit haute température (HT) et l'au moins un circuit basse température (NT) sont intégrés séparément l'un de l'autre dans ledit échangeur thermique (4).

4. Véhicule (1) selon la revendication 1 ou 2, **caractérisé en ce que** les flux fluidiques de l'au moins un circuit haute température (HT) et de l'au moins un circuit basse température (NT) sont réunis au moins temporairement à l'intérieur dudit échangeur thermique (4).

5. Véhicule (1) selon l'une quelconque des revendications 1 à 4, **caractérisé en ce que** le circuit haute température (HT) est formé par un circuit de refroidissement d'un moteur à combustion interne (3) ou est intégré dans un tel circuit.

6. Véhicule (1) selon l'une quelconque des revendications 1 à 4, **caractérisé en ce que** le circuit basse température (NT) est formé par un circuit de climatisation du véhicule (1) ou est intégré dans un tel circuit.

7. Véhicule (1) selon l'une quelconque des revendications précédentes, **caractérisé en ce que** les circuits (6, 7) de fluide de thermorégulation sont conçus de manière à être régulés en débit.

8. Véhicule (1) selon l'une quelconque des revendications précédentes, **caractérisé en ce**
**que** ledit au moins un échangeur thermique (4)
est formé par un fond de boîtier (5a) et/ou
par une paroi de boîtier (5b) et/ou par un couvercle de boîtier (5c) du boîtier (5) du stockage d'énergie électrochimique (2) ou est appliqué en tant que pièce incorporée ou rapportée, en contact direct ou indirect avec le boîtier par l'intermédiaire d'agents de transfert thermique, sur ledit boîtier (5).

9. Véhicule (1) selon l'une quelconque des revendications précédentes, **caractérisé en ce que** le véhicule (1) est un véhicule hybride ou hybride rechargeable (1) ou un véhicule électrique (1), qui présente au moins un prolongateur d'autonomie, ledit prolongateur d'autonomie étant formé par un moteur à combustion interne (3) et/ou un agencement de pile à combustible.
